(19) Europäisches Patentamt
European Patent Office
Office européen des brevets

(11) Publication number: **0 115 929**
**A1**

# (12) EUROPEAN PATENT APPLICATION

(21) Application number: **84300379.9**

(22) Date of filing: **23.01.84**

(51) Int. Cl.³: **C 07 F 15/00**, A 61 K 31/44

(30) Priority: **21.01.83 GB 8301602**
**06.10.83 GB 8326755**

(43) Date of publication of application: **15.08.84**
**Bulletin 84/33**

(84) Designated Contracting States: **AT BE CH DE FR GB IT LI LU NL SE**

(71) Applicant: **Tanabe Seiyaku Co., Ltd.,**
**No. 21 Dosho-machi 3-chome Higashi-ku, Osaka-shi Osaka-fu (JP)**

(72) Inventor: **Tsujihara, Kenji, No. 1149-133 Oaza-Omaki, Urawa-shi Saitama-ken (JP)**
Inventor: **Morikawa, Tamio, No. 16-2, Kaminakazato 2-chome, Kita-ku Tokyo-to (JP)**
Inventor: **Takeda, Mikio, No. 323-70, Oaza-Tsukamoto, Urawa-shi Saitama-ken (JP)**
Inventor: **Arai, Yoshihisa, No. 25-15, Nishi-Narashino 2-chome, Chiba-ken (JP)**

(74) Representative: **Shipton, Gordon Owen et al, W.P. THOMPSON & CO. Coopers Building Church Street, Liverpool L1 3AB (GB)**

(54) **Novel organic platinum complex and process for the preparation thereof.**

(57) A novel organic platinum complex of the formula:

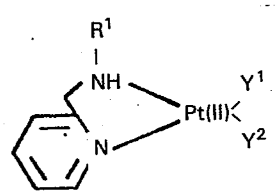

[I]

wherein $R^1$ is a hydrogen atom or methyl group, $Y^1$ and $Y^2$ are the same or different and each is a halogen atom, $NO_3$ or a group of the formula: $R^2$-COO-, or $Y^1$ and $Y^2$ combine to form a group of the formula: 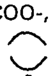 $SO_4$, 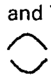 $PO_3OH$ or -O-CO-$(CHOH)_m$-$(CHR^3)_n$-CO-O-, $R^2$ is a hydroxy-substituted lower alkyl, carbamoyl or acetyl group, $R^3$ is a hydrogen atom or a lower alkyl group, and m and n are each integers of 0, 1 or 2 with the proviso that $0 \leqq m+n \leqq 2$; and a process for the preparation thereof. The compound [I] has an excellent anti-tumor activity and is useful as an anti-tumor agent.

EP 0 115 929 A1

0115929

DESCRIPTION

NOVEL ORGANIC PLATINUM COMPLEX AND PROCESS FOR THE PREPARATION THEREOF

The present invention relates to a novel organic platinum complex and a process for the preparation thereof. More particularly, it relates to a novel organic platinum complex of the formula:

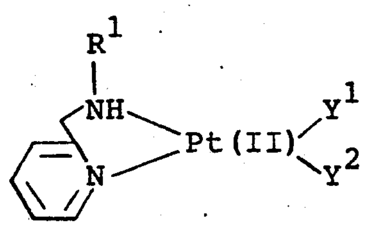

[I]

wherein $R^1$ is hydrogen atom or methyl group, $Y^1$ and $Y^2$ are the same or different and are each a halogen atom, $NO_3$ or a group of the formula: $R^2$-COO-, or $Y^1$ and $Y^2$ combine to form a group of the formula: $\frown SO_4$, $\frown PO_3OH$ or $-O-CO-(CHOH)_m-(CHR^3)_n-CO-O-$, $R^2$ is a hydroxy-substituted lower alkyl, carbamoyl or acetyl group, $R^3$ is hydrogen atom or a lower alkyl group, and m and n are an integer of 0, 1 or 2 with proviso of $0 \leqq m+n \leqq 2$, and a process for the preparation of the organic platinum complex.

The organic platinum complex [I] of the present invention has an excellent anti-tumor activity and is useful as an anti-tumor agent.

There have hitherto been prepared many organic platinum complexes wherein various diamines are used as a ligand, and the anti-tumor activity of these compounds have also been studied (cf. Rosenberg et al, Nature, 222, 385 (1969), etc.). However, these known compounds have toxicity

to kidney and the organ of hearing [cf. A.W. Prestayko, Cancer and Chemotherapy, 3, 133(1981)].

As a result of extensive study by the present inventors, it has been found that a certain organic platinum complex containing 2-aminomethylpyridine or its derivative as a ligand has excellent anti-tumor activity without increasing the toxicity.

The organic platinum complex of the present invention is a compound of the formula [I] wherein, for example, $R^1$ is hydrogen atom or methyl group, $Y^1$ and $Y^2$ are the same or different and are each a halogen atom such as chlorine, bromine or iodine, $NO_3$, or a group of the formula: $HOCH_2COO-$, $CH_3CH(OH)COO-$, $HOCH_2(OH)COO-$, $HOCH_2CH_2COO-$, $(CH_3)_2CHCH(OH)COO-$, $H_2NCOCOO-$ or $CH_3COCOO-$, or $Y^1$ and $Y^2$ combine to form a group of the formula: $\frown SO_4$, $\frown PO_3OH$, $-O-CO-CO-O-$, $-O-CO-CH_2-CO-O-$, $-O-CO-CH(CH_3)-CO-O-$, $-O-CO-CH(CH_2CH_3)-CO-O-$, $-O-CO-CH(OH)-CO-O-$, $-O-CO-CH(OH)CH_2-CO-O-$, $-CO-CH_2CH_2-CO-O-$ or $-O-CO-CH(OH)CH(OH)-CO-O-$. Preferred compounds are a compound of the formula [I] wherein $R^1$ is hydrogen atom or methyl group, $Y^1$ and $Y^2$ are the same or different and are each chlorine atom, bromine atom, $NO_3$ or a group of the formula: $HOCH_2COO-$, $H_2NCOCOO-$ or $CH_3COCOO-$, or $Y^1$ and $Y^2$ combine to form a group of the formula: $\frown SO_4$, $-O-CO-CO-O-$, $-O-CO-CH_2-CO-O-$, $-O-CO-CH(CH_3)-CO-O-$, $-O-CO-CH(OH)-CO-O-$ or $-O-CO-CH(CH_2CH_3)-CO-O-$.

Among them, a preferred subgenus includes the compound of the formula [I] wherein $R^1$ is hydrogen atom or methyl group, $Y^1$ and $Y^2$ are the same or different and are

each chlorine, bromine, $NO_3$ or a group of the formula: $HOCH_2COO-$, $H_2NCOCOO-$ or $CH_3COCOO-$, or $Y^1$ and $Y^2$ combine to form a group of the formula: ⊃$SO_4$, -O-CO-CO-O-, $-O-CO-CH_2-CO-O-$, $-O-CO-CH(CH_3)-CO-O-$, -O-CO-CH(OH)-CO-O-, or $-O-CO-CH(CH_2CH_3)-CO-O-$. Another preferred subgenus includes the compound of the formula [I] wherein $R^1$ is hydrogen atom, $Y^1$ and $Y^2$ are the same or different and are each chlorine, bromine, $NO_3$ or a group of the formula: $HOCH_2COO-$, $H_2NCOCOO-$ or $CH_3COCOO-$, or $Y^1$ and $Y^2$ combine to form a group of the formula: ⊃$SO_4$, -O-CO-CO-O-, $-O-CO-CH_2-CO-O-$, $-O-CO-CH(CH_3)-CO-O-$, -O-CO-CH(OH)-CO-O-, or $-O-CO-CH(CH_2CH_3)-CO-O-$. Another preferred subgenus includes the compound of the formula [I] wherein $R^1$ is hydrogen atom, $Y^1$ and $Y^2$ are the same or different and are each chlorine, $NO_3$ or a group of the formula: $HOCH_2COO-$ or $H_2NCOCOO-$, or $Y^1$ and $Y^2$ combine to form a group of the formula: ⊃$SO_4$, -O-CO-CO-O-, $-O-CO-CH_2-CO-O-$, $-O-CO-CH(CH_3)-CO-O-$ or -O-CO-CH(OH)-CO-O-. A further preferred subgenus includes the compound of the formula [I] wherein $R^1$ is hydrogen atom, $Y^1$ and $Y^2$ are a group of the formula: $H_2NCOCOO-$, or $Y^1$ and $Y^2$ combine to form a group of the formula: -O-CO-CO-O-, $-O-CO-CH_2-CO-O-$, $-O-CO-CH(CH_3)-CO-O-$ or -O-CO-CH(OH)-CO-O-. More preferred subgenus includes the compound of the formula [I] wherein $R^1$ is hydrogen atom, $Y^1$ and $Y^2$ are a group of the formula: $H_2NCOCOO-$, or $Y^1$ and $Y^2$ combine to form a group fo the formula: -O-CO-CO-O- or $-O-CO-CH_2-CO-O-$.

The organic platinum complex [I] of the present invention can be prepared for example by the following processes.

[Process A]:

A compound of the formula:

$$M_2[Pt(II)X_4] \qquad [II]$$

wherein X is a halogen atom and M is an alkali metal, is reacted with a compound of the formula:

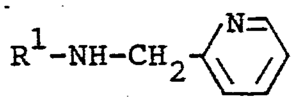

[III]

wherein $R^1$ is as defined above to give an organic platinum complex of the formula:

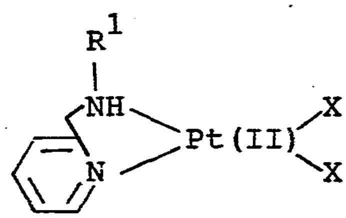

[I-a]

wherein $R^1$ and X are as defined above.

[Process B]:

A compound of the formula [I-a] is reacted with silver sulfate or silver nitrate to give an organic platinum complex of the formula:

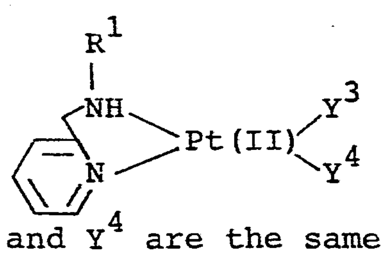

[I-b]

wherein $Y^3$ and $Y^4$ are the same and are $NO_3$, or $Y^3$ and $Y^4$ combine to form a group of the formula: $\supset SO_4$, and $R^1$ is as defined above.

[Process C]:

A compound of the formula:

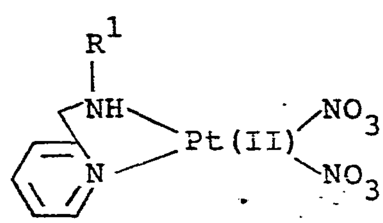

[IV]

wherein $R^1$ is as defined above with an alkali metal halide, a di(alkali metal) hydrogen phosphate, or a compound of the formula: $R^2$-COOM' (wherein $R^2$ is as defined above, and M' is an alkali metal) or M"-O-CO-$(CHOH)_m$-$(CHR^3)_n$-CO-O-M" (wherein $R^3$, m and n are as defined above, and M" is an alkali metal) to give an organic platinum complex of the formula:

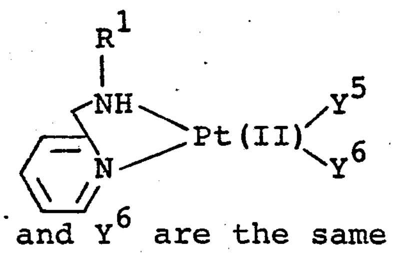

[I-c]

wherein $Y^5$ and $Y^6$ are the same or different and are each a halogen atom, $NO_3$, or a group of the formula: $R^2$-COO- ($R^2$ is as defined above), or $Y^5$ and $Y^6$ combine to form a group of the formula: $\frown PO_3OH$ or -O-CO-$(CHOH)_m$-$(CHR^3)_n$-CO-O- ($R^3$, m and n are as defined above), and $R^1$ is as defined above.

The procedure of the above processes is explained in detail below.

Process A: This process can be carried out by dissolving the compound [II] in an appropriate solvent and adding thereto a compound [III] and stirring the mixture. Examples of the starting compound [II] are, for example, $K_2[Pt(II)Cl_4]$ and $Na_2[Pt(II)Cl_4]$ (i.e. X is chlorine). The solvent is preferably water. The starting compound [II] is preferably used in an amount of about 0.8 to 1.0 mole per mole of the compound [III]. The reaction is usually carried out at room temperature.

Process B: This process is preferably carried out by adding the compound [I-a] which is prepared by Process A to an appropriate solvent, adding thereto silver

sulfate or silver nitrate and stirring the mixture. The solvent is preferably water. Silver nitrate is preferably used in an amount of about 2 moles per mole of the compound [I-a], and silver sulfate is preferably used in an approximately equimolar amount to the compound [I-a]. The reaction is usually carried out at room temperature. The reaction of the compound [I-a] and silver salt is preferably carried out in the absence of light. The compound [I-a] wherein X is chlorine is preferably used as the starting compound.

Process C: This process can preferably be carried out by adding the compound [IV] which is prepared by Process B to an appropriate solvent, adding thereto an alkali metal halide, di(alkali metal) hydrogen phosphate or a compound of the formula: $R^2$-COOM' ($R^2$ and M' are as defined above) or M"-O-CO-$(CHOH)_m$-$(CHR^3)_n$-CO-O-M" ($R^3$, M", m and n are as defined above), and stirring the mixture. The alkali metal halide includes, for example, an alkali metal bromide, such as sodium bromide and potassium bromide, and an alkali metal iodide such as sodium iodide and potassium iodide. Di(alkali metal) hydrogen phosphate includes, for example, $Na_2HPO_4$ and $K_2HPO_4$. The compound of the formula: $R^2$-COOM' includes a compound wherein $R^2$ is a hydroxy-substituted lower alkyl group such as hydroxymethyl, 1-hydroxyethyl, 1,2-dihydroxyethyl, 2-hydroxyethyl and 1-hydroxy-2-methylpropyl group, carbamoyl group, or acetyl group, and M' is an alkali metal such as sodium and

potassium. The compound of the formula: M"-O-CO-$(CHOH)_m$-$(CHR^3)_n$-CO-O-M" includes, for example, disodium or dipotassium salt of oxalic acid, malonic acid, 2-methylmalonic acid, 2-ethylmalonic acid, 2-hydroxymalonic acid, d,l-malic acid, d,l-tartaric acid or succinic acid. The solvent is preferably water. The alkali metal halide and the compound of the formula: $R^2$-COOM' are preferably used in an amount of about 1 to 1.5 or 2 to 2.5 moles per mole of the compound [IV] to give a mono-substituted compound or a di-substituted compound, respectively, and the di(alkali metal) hydrogen phosphate and the compound of the formula: M"-O-CO-$(CHOH)_m$-$(CHR^3)_n$-CO-O-M" are preferably used in an amount of 1 to 1.5 moles per mole of the compound [IV]. The reaction is usually carried out at room temperature. The dissolution of the compound [IV] in a solvent is preferably done with heating.

The desired compound [I] prepared by the above process can be isolated from the reaction mixture by a conventional method, for example, by filtering the resulting precipitate. If required, prior to said filtration the reaction mixture may be concentrated or it may be subjected to a column chromatography, followed by concentration. When silver chloride is produced as a by-product in the above reactions, it is preferable to separate off the silver chloride by filtration, to add in portions a 5 % aqueous potassium chloride solution to the filtrate and filter in order to remove the unreacted silver compound in the form of silver chloride, and then to subject the resulting filtrate to the above isolation procedure.

The organic platinum complex [I] of the present invention shows potent anti-tumor activity against various tumor cells such as Ehrlich carcinoma, sarcoma 180, leukemia L-1210, Yoshida sarcoma, rat ascites hepatoma and so forth. It may be useful to prolong the survival time of warm-blood animals, including human, afflicted with tumors and/or minimize the growth of tumors in said animals. For example, according to the experiments of anti-leukemia L-1210 activity, cis-dioxalato(2-aminomethylpyridine) platinum(II) and cis-malonato(2-aminomethylpyridine) platinum (II) at a dose of 50 mg/kg/day showed an increase of more than 745 % in the life span of mice. Besides, according to the experiment of activity against Ehrlish ascites carcinoma, cis-oxalato(2-aminomethylpyridine) platinum (II) and cis-malonato(2-aminomethylpyridine) platinum (II) showed M.E.D.: 3.12 mg/kg/day (M.E.D. means a minimum effective dose per day which causes 100 % inhibition of Ehrlich ascites carcinoma). The compound of the present invention is also useful for the treatment of various other tumors such as prostate tumor, orchis tumor, ovary tumor, malignant lymphoma, leukemia, breast cancer and the like. The compound of the present invention shows potent anti-tumor activities and has a low toxicity, and hence, can be used as an anti-tumor agent with high safety index.

The organic platinum complex [I] of the present invention can be used for pharmaceutical use in the form of a pharmaceutical preparation suitable for either oral or

parenteral administration, preferably for parenteral administration. The compound [I] may also be used in conjunction or admixture with a pharmaceutical excipient. The excipient selected should be one which does not react with the compound [I]. Suitable excipients include, for example, gelatin, lactose, glucose, sodium chloride, starch, magnesium stearate, talcum, vegetable oils, and so forth. Other known medicinal excipients may be employed. The pharmaceutical preparation may be a solid dosage form such as a tablet, a coated tablet, a pill or a capsule; or a liquid dosage form such as a solution, a suspension or an emulsion. Further, for parenteral administration, the compound [I] of the present invention can also be used in the form of an injection or a suppository, preferably an injection. For injection, it is used in the form of an isotonic solution, which is prepared by admixing the compound [I] with an isotonic agent such as mannitol, sodium chloride, glucose, sorbitol, glycerol, xylitol, fructose, maltose, mannose, or the like. The pharmaceutical preparation may be sterilized and/or may contain auxiliaries such as preserving and stabilizing agents. The dose of the compound [I] for pharmaceutical use depends on route of administration; the age, weight and condition of the host; and the particular disease to be treated. In general, it may be used for pharmaceutical use at a dose of about 20 to 1000 $mg/m^2$, especially 50 to 500 $mg/m^2$, per day.

Practical and presently-preferred embodiments of the present invention are illustratively shown in the

test compound was begun 24 hours after the inoculation of the leukemic cells and performed once a day for 5 days. The survival days of the treated mice were observed.

[Compounds tested]

| Compound No. | Chemical name |
|---|---|
| 1. | cis-Oxalato(2-aminomethylpyridine) platinum (II) |
| 2. | cis-Malonato(2-aminomethylpyridine) platinum (II) |
| 3. | cis-Dioxamato(2-aminomethylpyridine) platinum (II) |

[Results]

The results of the experiments are shown in the following Tables 1 and 2.

Table 1 (Preventive effect against the growth of Ehrlich ascites carcinoma: Method A)

| Comp. No. | Dose (mg/kg/day) | Ascites volume(g) T/C*1 | Inhibition rate *2 (%) | MTD*3 | MED*4 | Therapeutic index *5 |
|---|---|---|---|---|---|---|
| 1 | 200<br>100<br>25<br>6.25<br>3.12<br>1.56 | -<br>0/3.2<br>0/3.2<br>0/3.2<br>0/3.2<br>2.5/3.2 | Toxic(5/5)*6<br>100<br>100<br>100<br>100<br>21.9 | 100 | 3.12 | 32 |
| 2 | 200<br>100<br>25<br>6.25<br>3.12<br>1.56 | -<br>0/3.1<br>0/3.1<br>0/3.1<br>0/3.1<br>2.7/3.1 | Toxic(5/5)*6<br>100<br>100<br>100<br>100<br>12.9 | 100 | 3.12 | 32 |

[Note]:

*1) T = the average volume of ascites in the treated mice

C = the average volume of ascites in the untreated mice (control group of mice)

*2) Inhibition ratio (%) = $\frac{C - T}{C} \times 100$

*3) MTD = Maximum Tolerated Dose (i.e. the maximum dose which shows 100 % inhibition for the growth of Ehrlich ascites tumor in mice without causing the death of said mice)

*4) MED = Minimum Effective Dose (i.e. the minimum dose which shows 100 % inhibition for the growth of said ascites tumor)

*5) Therapeutic index = MTD/MED

*6) the number of mice died/the number of mice used

Table 2 (Effect on life span of mice implanted with Leukemia L-1210, Method B)

| Comp. No. | Dose (mg/kg/day) | Mean survival days (T/C) *1 | ILS *2 (%) | 60-day survivors *3 | Therapeutic index ($OD/ILS_{30}$) *4 |
|---|---|---|---|---|---|
| 1 | 100 | >60.0/7.1 | >745.1 | 4/4 | 76.9 (100/1.3) |
| | 50 | >60.0/7.1 | >745.1 | 4/4 | |
| | 25 | >40.0/7.1 | >463.4 | 2/4 | |
| | 12.5 | >26.2/7.1 | >269.0 | 1/4 | |
| | 6.25 | 12.8/7.1 | 80.3 | 0/4 | |
| | 3.12 | 10.8/7.1 | 52.1 | 0/4 | |
| | 1.56 | 9.5/7.1 | 33.8 | 0/4 | |
| | 0.78 | 8.5/7.1 | 19.7 | 0/4 | |
| 2 | 100 | >60.0/7.0 | >757.1 | 4/4 | 55.6 (100/1.8) |
| | 50 | >60.0/7.0 | >757.1 | 4/4 | |
| | 25 | 20.0/7.0 | 185.7 | 0/4 | |
| | 12.5 | 13.5/7.0 | 92.9 | 0/4 | |
| | 6.25 | 11.3/7.0 | 61.4 | 0/4 | |
| | 3.12 | 10.3/7.0 | 47.1 | 0/4 | |
| | 1.56 | 8.8/7.0 | 25.7 | 0/4 | |
| 3 | 100 | >60.0/7.0 | >757.1 | 4/4 | 60.6 (100/1.65) |
| | 50 | >49.5/7.0 | >607.1 | 3/4 | |
| | 25 | 14.0/7.0 | 100.0 | 0/4 | |
| | 12.5 | 13.3/7.0 | 90.0 | 0/4 | |
| | 6.25 | 13.0/7.0 | 85.7 | 0/4 | |
| | 3.12 | 10.3/7.0 | 47.1 | 0/4 | |
| | 1.56 | 9.0/7.0 | 28.6 | 0/4 | |

[Note]:

*1) T = the mean survival days of the treated mice

C = the mean survival days of the untreated mice (control group of mice)

*2) ILS (Increase in Life Span) = $\frac{T - C}{C}$ x 100

*3) 60-day survivors = the number of mice survived for 60 days/the number of mice used

*4) OD = optimal Dose (i.e. the daily dose at which the maximum increase in the life span of the leukemic cell-inoculated mice occurs)

$ILS_{30}$ = the minimum daily dose which shows an increase of 30 % in the life span of mice

Example 1

2-Aminomethylpyridine (1.20 g) is added to a solution of potassium tetrachloroplatinate (II) (4.15 g) in water (50 ml), and the mixture is stirred at room temperature overnight. The precipitated crystal is separated by filtration, washed with a small amount of cold water and dried to give cis-dichloro-(2-aminomethylpyridine) platinum (II) (3.19 g) as brownish yellow crystals.

Elementary analysis for $C_6H_8N_2Cl_2Pt$:

Found (%): C,19.26; H,2.15; N,7.48

Calcd.(%): C,19.41; H,2.22; N,7.44

The IR spectrum of the above compound is shown in the attached Figure 1.

Example 2

A solution of siliver nitrate (3.40 g) in water (40 ml) is added to a suspension of cis-dichloro(2-aminomethylpyridine) platinum (II) (3.74 g) prepared in Example 1 in water (200 ml), and the mixture is stirred with shielding the light at room temperature over two nights. The precipitated silver chloride is filtered off, and a 5 % aqueous

potassium chloride solution is added in portions to the filtrate to convert the unreacted silver nitrate into silver chloride which is removed by filtration. The resulting filtrate is concentrated to dryness under reduced pressure and then dried to give cis-dinitrato(2-aminomethylpyridine) platinum (II) (3.9 g) as a pale yellow powder.

Elementary analysis for $C_6H_8N_4O_6Pt$:

Found (%): C,16.86; H,1.87; N,13.11

Calcd.(%): C,19.95; H,1.76; N,12.96

The IR spectrum of the above compound is shown in the attached Figure 2.

Example 3

Cis-dinitrato(2-aminomethylpyridine) platinum (II) (0.43 g) prepared in Example 2 is dissolved in water (40 ml) with heating, and thereto is added potassium bromide (0.71 g), and the mixture is stirred at room temperature overnight. The precipitated crystal is separated by filtration and dried to give cis-dibromo(2-aminomethylpyridine) platinum (II) (0.43 g) as a brownish yellow powder.

Elementary analysis for $C_6H_8N_2Br_2Pt$:

Found (%): C,15.55; H,1.73; N,6.05

Calcd.(%): C,15.73; H,1.68; N,6.28

The IR spectrum of the above compound is shown in the attached Figure 3.

Example 4

Cis-dichloro(2-aminomethylpyridine) platinum (II) (0.37 g) prepared in Example 1 is added to a solution of silver sulfate (0.31 g) in water (100 ml), and the mixture

is stirred with shielding the light at room temperature over two nights. The reaction mixture is treated in the same manner as described in Example 2 to give cis-sulfato(2-aminomethylpyridine) platinum (II) (0.32 g) as a pale yellowish white powder.

Elementary analysis for $C_6H_8N_2O_4SPt$:

Found (%): C,18.04; H,2.00; N,7.01

Calcd.(%): C,17.88; H,1.93; N,6.85

IR $\nu_{max}^{Nujol}$ ($cm^{-1}$): 3250, 3210, 1610, 1120, 1030

Example 5

Cis-dinitrato(2-aminomethylpyridine) platinum (II) (0.43 g) prepared in Example 2 is dissolved in water (40 ml) with heating, and thereto is added disodium malonate solution (0.16 g in 20 ml of water), and the mixture is allowed to stand at room temperature for 3 days. The reaction mixture is concentrated under reduced pressure. The separated crystals are collected by filtration, washed with a small amount of cold water and dried to give cis-malonato-(2-aminomethylpyridine) platinum (II) (0.33 g) as a white powder.

Elementary analysis for $C_9H_{10}N_2O_4Pt$:

Found (%): C,26.66; H,2.46; N,6.91

Calcd.(%): C,26.78; H,2.28; N,7.12

The IR spectrum of the above compound is shown in the attached Figure 4.

Examples 6 to 13

In the same manner as described in Example 5, the

following compounds are prepared by using cis-dinitrato(2-aminomethylpyridine) platinum (II) and sodium salt of an organic carboxylic acid.

(6) Cis-dipyruvato(2-aminomethylpyridine) platinum (II), pale yellow powder, yield: 75 %

Elementary analysis for $C_{12}H_{14}N_2O_6Pt$:

Found (%): C,30.18; H,2.93; N,5.87

Calcd.(%): C,30.14; H,2.78; N,5.69

IR $\nu_{max}^{Nujol}$ ($cm^{-1}$): 3300, 3210, 1760, 1640

(7) Cis-oxalato(2-aminomethylpyridine) platinum (II), colorless crystalline powder, yield: 90 %

Elementary analysis for $C_8H_8N_2O_4Pt$:

Found (%): C,24.55; H,2.04; N,7.16

Calcd.(%): C,24.72; H,2.13; N,6.98

The IR spectrum of the above compound is shown in the attached Figure 5.

(8) Cis-diglycolato(2-aminomethylpyridine) platinum (II), white powder, yield: 77 %

Elementary analysis for $C_{10}H_{14}N_2O_6Pt$:

Found (%): C,26.49; H,3.09; N,6.18

Calcd.(%): C,26.35; H,3.26; N,6.01

The IR spectrum of the above compound is shown in the attached Figure 6.

(9) Cis-(glycolato)(nitrato)(2-aminomethylpyridine) platinum (II), pale yellow powder, yield: 70 %

Elementary analysis for $C_8H_{11}N_3O_6Pt$:

Found (%): C,21.81; H,2.50; N,9.54

Calcd.(%): C,21.73; H,2.33; N,9.71

IR $\nu_{max}^{Nujol}$ ($cm^{-1}$): 3210, 3120, 1600

(10) Cis-dioxamato(2-aminomethylpyridine) platinum (II), pale yellow powder, yield: 58 %

Elementary analysis for $C_{10}H_{12}N_4O_6Pt$:

Found (%): C,24.97; H,2.56; N,11.75

Calcd.(%): C,25.05; H,2.51; N,11.69

The IR spectrum of the above compound is shown in the attached Figure 7.

(11) Cis-(2-methylmalonato)(2-aminomethylpyridine) platinum (II), colorless powder, yield: 83 %

Elementary analysis for $C_{10}H_{12}N_2O_4Pt$:

Found (%): C,28.60; H,2.82; N,6.72

Calcd.(%): C,28.64; H,2.86; N,6.68

The IR spectrum of the above compound is shown in the attached Figure 8.

(12) Cis-(2-hydroxymalonato)(2-aminomethylpyridine) platinum (II), colorless powder, yield: 83 %

Elementary analysis for $C_9H_{10}N_2O_5Pt$;

Found (%): C,25.71; H,2.36; N,6.54

Calcd.(%): C,25.65; H,2.38; N,6.65

The IR specturm of the above compound is shown in the attached Figure 9.

(13) Cis-(2-ethylmalonato)(2-aminomethylpyridine) platinum (II), colorless powder, yield: 79 %

Elementary analysis for $C_{11}H_{14}N_2O_2Pt$:

Found (%): C,30.48; N,3.23; N,6.47

Calcd.(%): C,30.35; H,3.20; N,6.38

The IR spectrum of the above compound is shown in the attached Figure 10.

Example 14

(1) A mixture of pyridine-2-aldehyde (5.4 g), methylamine hydrochloride (0.5 g) and methanolic methylamine (3 g in 100 ml) is hydrogenated in the presence of Pd/C catalyst to give 2-(methylaminomethyl)pyridine (4.5 g), b.p. 79 - 81°C/14 mmHg.

IR $\nu_{max}^{Nujol}$ ($cm^{-1}$): 3340, 1590, 1570

Mass m/e: 121 ($M^+$-1), 92 ($M^+$-30 ($NHCH_3$))

NMR ($CDCl_3$) $\delta$ : 2.47 (3H, s, $NCH_3$), 2.20 (1H, s, NH), 3.87 (2H, s, $CH_2$), 7.05 - 7.80 (3H, m, proton at pyridine ring), 8.56 (1H, d, J=3.7 Hz, proton at pyridine ring)

(2) In the same manner as described in Example 1, potassium platinate chloride (4.15 g) is reacted with 2-(methylaminomethyl)pyridine (1.34 g) to give cis-dichloro-(2-(methylaminomethyl)pyridine) platinum (II) (3.3 g) as pale yellow crystals.

Elementary analysis for $C_7H_{10}N_2Cl_2Pt$:

Found (%): C,21.65; H,2.59; N,7.21

Calcd.(%): C,21.59; H,2.59; N,7.19

The IR spectrum of the above compound is shown in the attached Figure 11.

Example 15

In the same manner as described in Example 2, cis-dichloro(2-methylaminomethyl)pyridine) platinum (II) (0.39

g) prepared in Example 14 is reacted with silver nitrate (0.34 g) to give cis-dinitrato(2-(methylaminomethyl)-pyridine) platinum (II) (0.40 g) as a pale yellow powder.

Elementary analysis for $C_7H_{10}N_4O_6Pt$:

Found (%): C,19.04; H,2.26; N,12.69

Calcd.(%): C,19.26; H,2.41; N,12.81

IR $\nu_{max}^{Nujol}$ ($cm^{-1}$): 3190, 1620, 1520, 1280

Example 16

In the same manner as described in Example 5 cis-dinitrato(2-(methylaminomethyl)pyridine) platinum (II) (0.44 g) prepared in Example 15 is reacted with sodium oxalate (0.13 g) to give cis-oxalato(2-methylaminomethyl)pyridine) platinum (II) (0.37 g) as a white powder.

Elementary analysis for $C_9H_{10}N_2O_4Pt$:

Found (%): C,26.66; H,2.46; N,6.91

Calcd.(%): C,26.52; H,2.61; N,6.78

IR $\nu_{max}^{Nujol}$ ($cm^{-1}$): 3160, 1720, 1650

..........................................................

CLAIMS

1. An organic platinum complex of the formula:

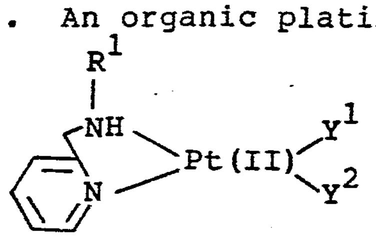

[I]

wherein $R^1$ is a hydrogen atom or methyl group, $Y^1$ and $Y^2$ are the same or different and each is a halogen atom, $NO_3$ or a group of the formula: $R^2$-COO-, or $Y^1$ and $Y^2$ combined to form a group of the formula: $\frown SO_4$, $\frown PO_3OH$ or $-O-CO-(CHOH)_m-(CHR^3)_n-CO-O-$, $R^2$ is a hydroxy-substituted alkyl having 1 to 4 carbon atoms, carbamoyl or acetyl group, $R^3$ is a hydrogen atom or an alkyl having 1 to 4 carbon atoms, and m and n are each integers of 0, 1 or 2 with the proviso that $0 \leqq m+n \leqq 2$.

2. Complex according to claim 1, wherein $Y^1$ and $Y^2$ are the same or different and each is a chlorine atom, bromine atom, $NO_3$ or a group of the formula: $HOCH_2COO-$, $H_2NCOCOO-$ or $CH_3COCOO-$, or $Y^1$ and $Y^2$ combine to form a group of the formula: $\frown SO_4$, $-OCO-COO-$, $-OCO-CH_2-COO-$, $OCO-CH(CH_3)-COO-$, $-OCO-CH(OH)-COO-$, or $-OCO-CH(CH_2CH_3)-COO-$.

3. Complex according to claim 2, wherein $R^1$ is a hydrogen atom.

4. Complex according to claim 3, wherein $Y^1$ and $Y^2$ are the same or different and each is a chlorine atom, $NO_3$ or a group of the formula: $HOCH_2COO-$ or $H_2NCOCOO-$, or $Y^1$ and $Y^2$ combine to form a group of the formula: $\frown SO_4$; $-OCO-COO-$, $-OCO-CH_2-COO-$, $-OCO-CH(CH_3)-COO$ or $-OCO-CH(OH)-COO-$.

5. Complex according to claim 4, wherein $Y^1$ and $Y^2$ are a group of the formula: $H_2NCOCOO-$, or $Y^1$ and $Y^2$ combine to form a group of the formula: $-OCO-COO-$, $-OCO-CH_2COO-$, $-OCO-CH(CH_3)-COO-$ or $-OCO-CH(OH)-COO-$.

6. Complex according to claim 5, wherein Y1 and Y2 are a group of the formula: $H_2NCOCOO-$, or $Y^1$ and $Y^2$ combine to form a group of the formula: -OCO-COO- or $-OCO-CH_2-COO-$.

7. Complex according to claim 6, which is cis-dioxamato(2-aminomethylpyridine) platinum (II).

8. Complex according to claim 6, which is cis-malonato(2-aminomethylpyridine) platinum (II).

9. Complex according to claim 6, which is cis-oxalato(2-aminomethylpyridine) platinum (II).

10. A process for preparing an organic platinum complex of the formula given in claim 1 which comprises

a) reacting a compound of the formula:

$$M_2[Pt(II)X_4] \qquad [II]$$

wherein M is an alkali metal and X is a halogen atom, with a compound of the formula:

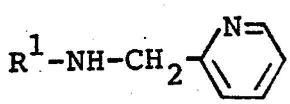

[III]

wherein R1 is as defined in claim 1 to give a compound of the formula:

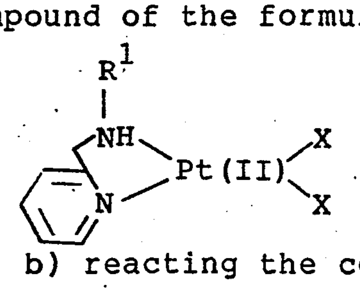

[I-a]

b) reacting the compound of the formula [I-a] with silver sulfate or silver nitrate to give a compound of the formula:

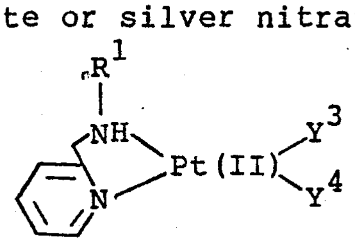

[I-b]

wherein $Y^3$ and $Y^4$ are $NO_3$, or $Y^3$ and $Y^4$ combine to form a group of the formula: $\supset SO_4$ and $R^1$ is as defined in claim 1, or

c) reacting a compound of the formula:

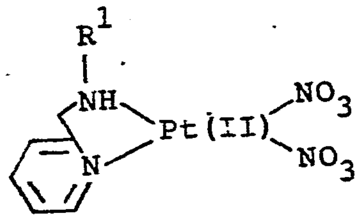

[IV]

wherein $R^1$ is as defined in claim 1, with an alkali metal halide, di(alkali metal) hydrogen phosphate, or a compound of the formula: $R^2$-COOM'(wherein $R^2$ is as defined in claim 1, and M' is an alkali metal) or M"-O-CO-$(CHOH)_m$-$(CHR^3)_n$-CO-O-M" (wherein R3, m and n are as defined in claim 1, and M" is an alkali metal) to give a compound of the formula:

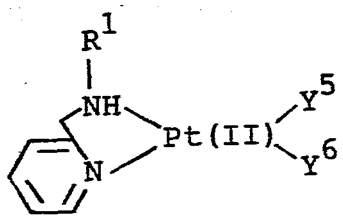

[I-c]

wherein $Y^5$ and $Y^6$ are the same or different and each is a halogen atom, $NO_3$, or a group of the formula R2-COO- and $Y^5$ and $Y^6$ combine to form a group of the formula $PO_3OH$ or -O-CO-$(CHOH)_m$-$(CHR^3)_n$-CO-O-, and R1, R2 and $R^3$, m and n are as defined in claim 1.

11. A pharmaceutical composition, which comprises as an essential active ingredient an organic platinum complex according to any of claims 1 to 9 in admixture with a pharmaceutically acceptable carrier or diluent.

12. Organic platinum complex according to any of claims 1 to 9 for use as an anti-tumor agent.

..................................................

0115929

1/11

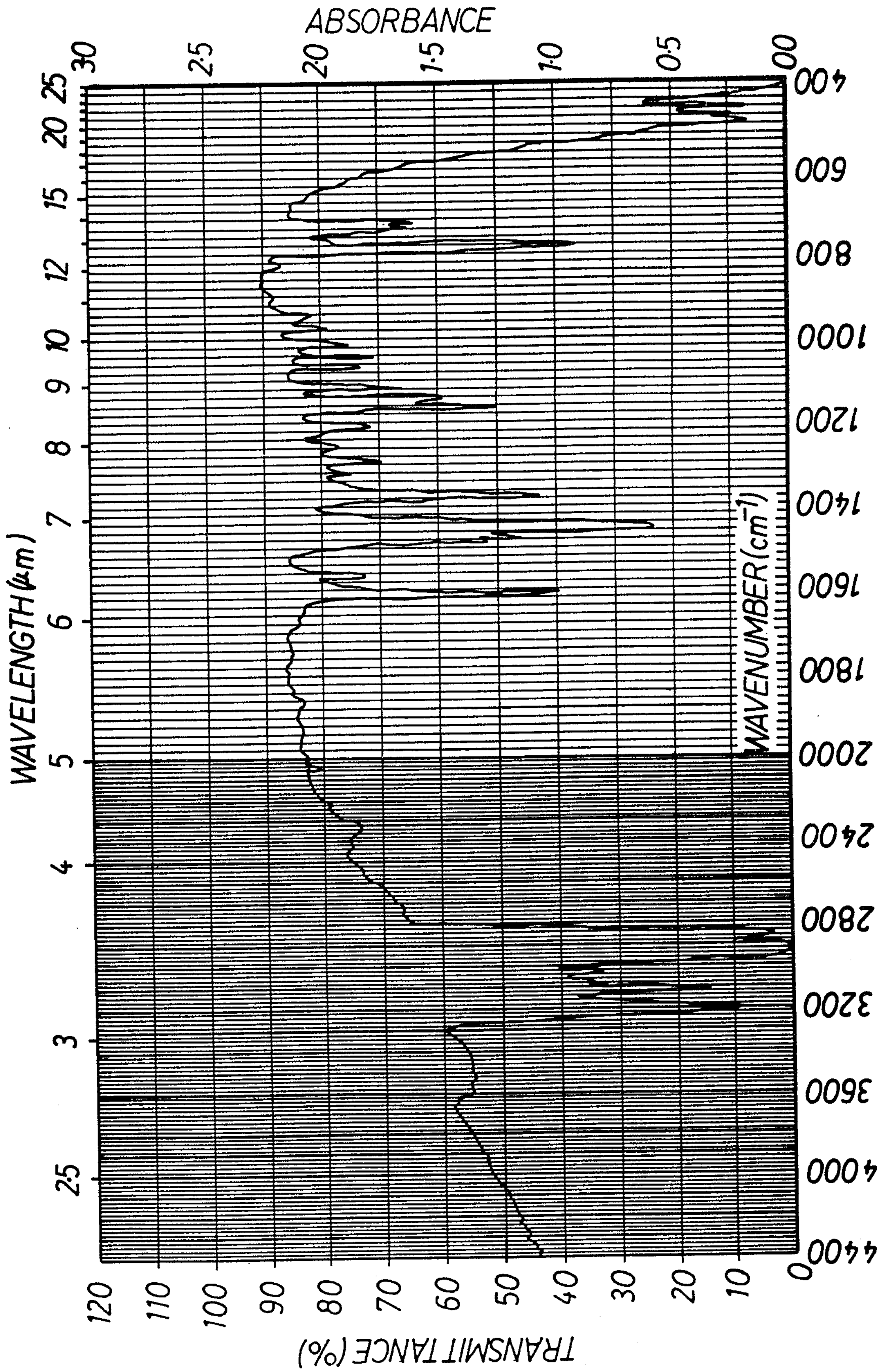


Fig 1

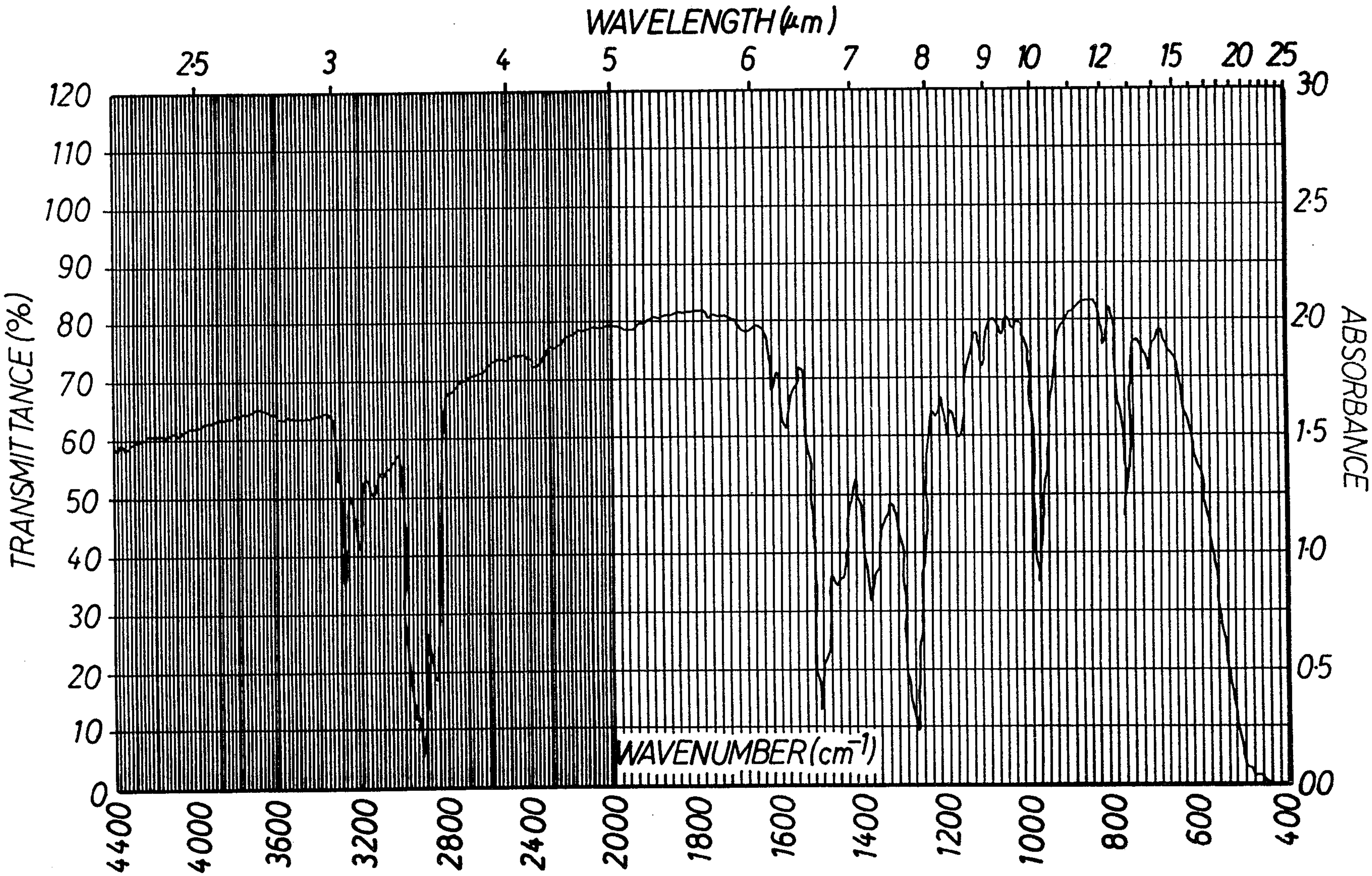
WAVELENGTH (µm)
2·5 3 4 5 6 7 8 9 10 12 15 20 25
TRANSMITTANCE (%)
120 110 100 90 80 70 60 50 40 30 20 10 0
ABSORBANCE
3·0 2·5 2·0 1·5 1·0 0·5 0·0
WAVENUMBER (cm⁻¹)
4400 4000 3600 3200 2800 2400 2000 1800 1600 1400 1200 1000 800 600 400

Fig 2.

0115929

3/11

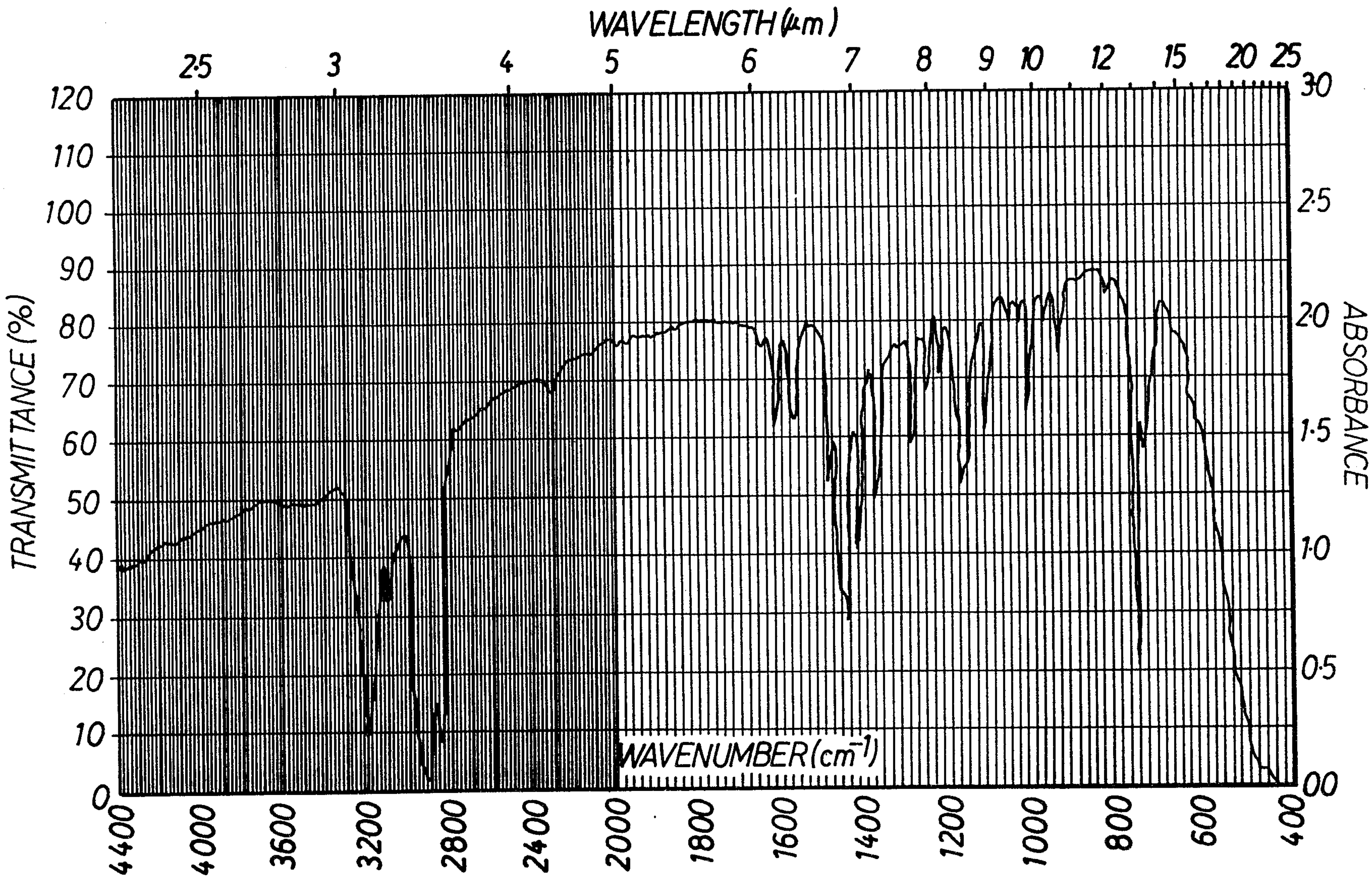


Fig 3.

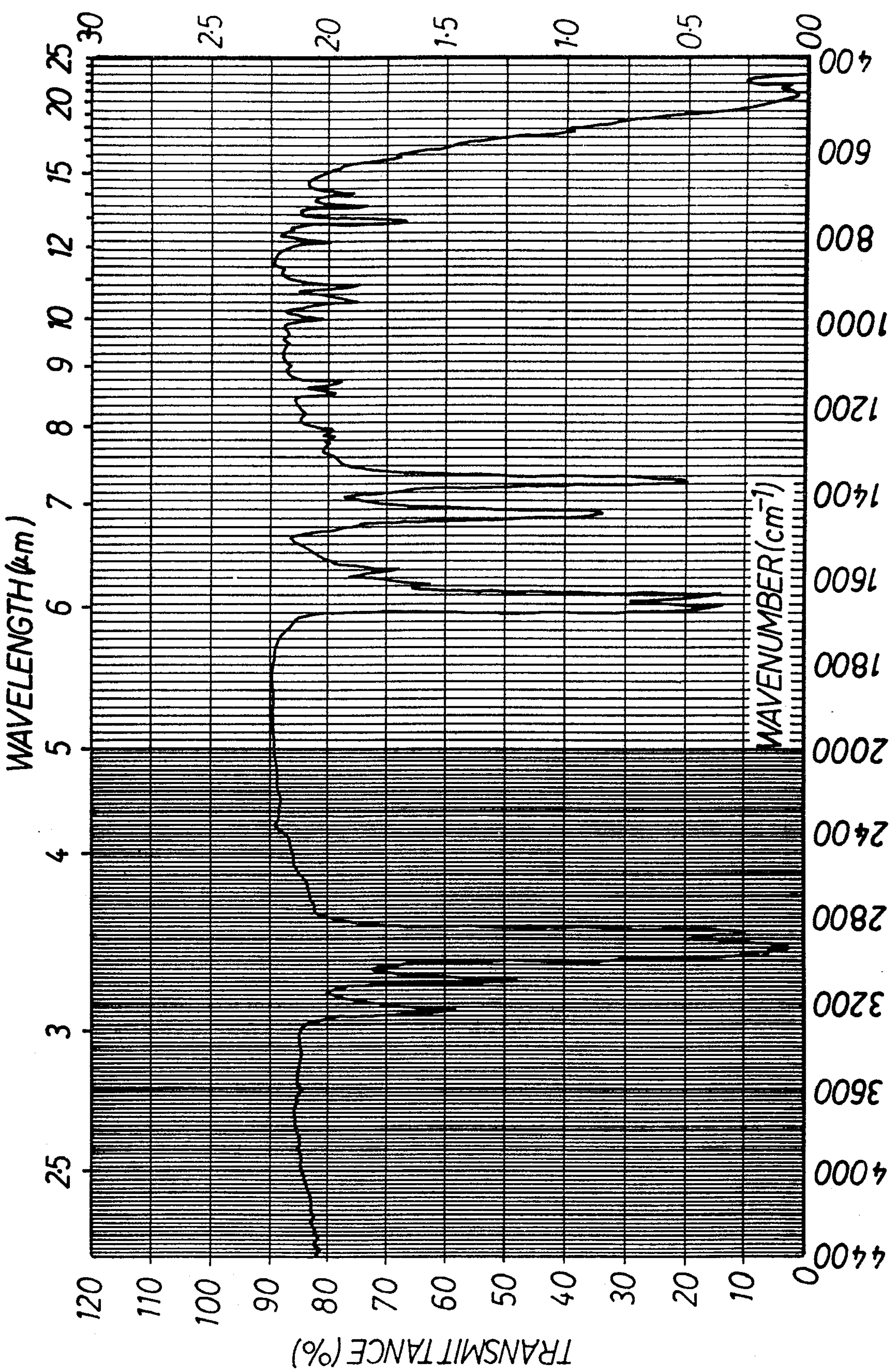
WAVELENGTH (μm)
WAVENUMBER (cm⁻¹)
TRANSMITTANCE (%)
25
20
15
12
10
9
8
7
6
5
4
3
2.5
3.0
2.5
2.0
1.5
1.0
0.5
0.0
400
600
800
1000
1200
1400
1600
1800
2000
2400
2800
3200
3600
4000
4400
120
110
100
90
80
70
60
50
40
30
20
10
0

Fig 4.

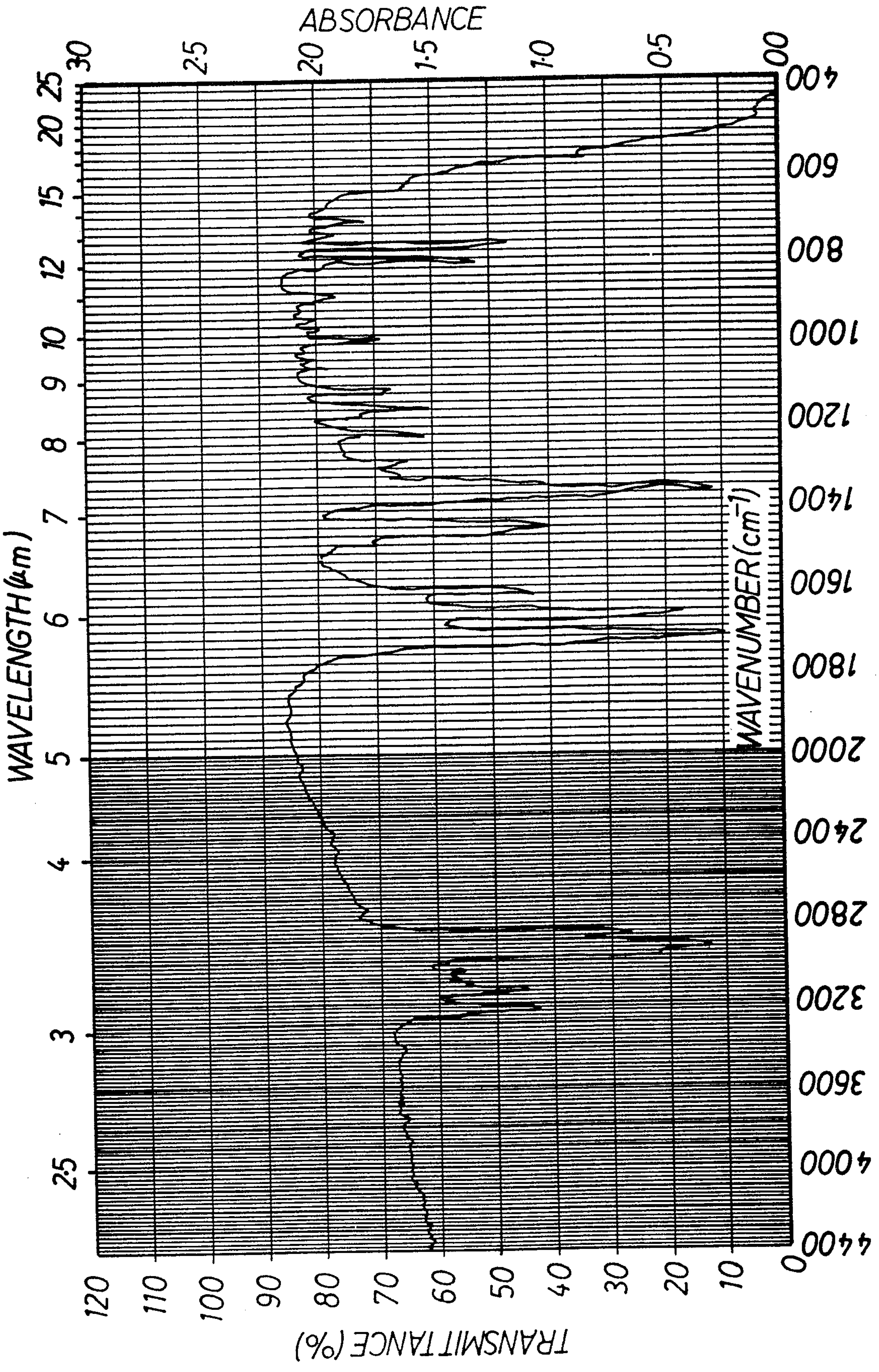

ABSORBANCE
3·0
2·5
2·0
1·5
1·0
0·5
0·0
WAVELENGTH (μm)
25
20
15
12
10
9
8
7
6
5
4
3
2·5
WAVENUMBER (cm⁻¹)
400
600
800
1000
1200
1400
1600
1800
2000
2400
2800
3200
3600
4000
4400
TRANSMITTANCE (%)
120
110
100
90
80
70
60
50
40
30
20
10
0


Fig 5.

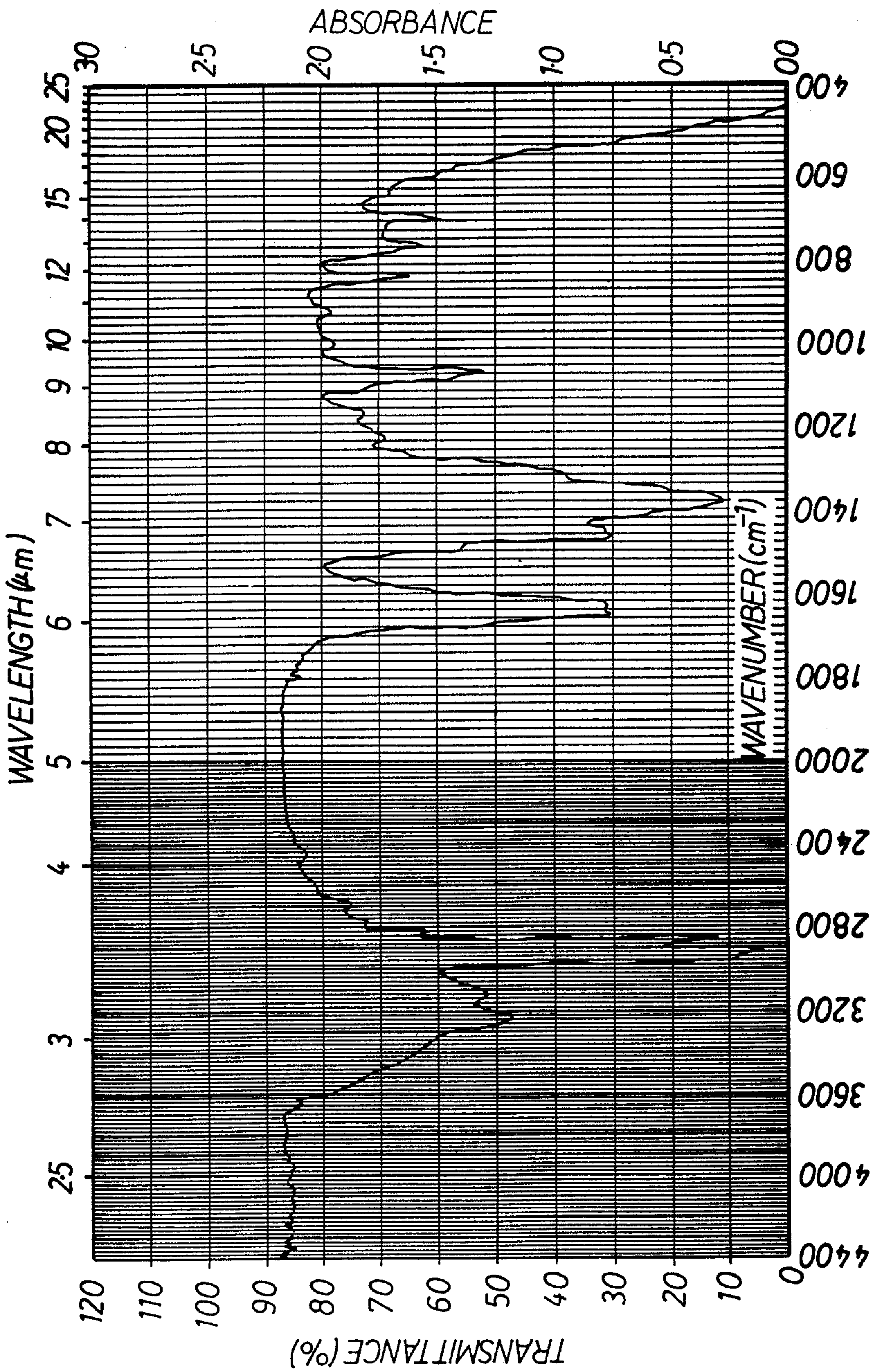

ABSORBANCE
3·0 2·5 2·0 1·5 1·0 0·5 0·0
WAVELENGTH (μm)
25 20 15 12 10 9 8 7 6 5 4 3 2·5
WAVENUMBER (cm⁻¹)
400 600 800 1000 1200 1400 1600 1800 2000 2400 2800 3200 3600 4000 4400
TRANSMITTANCE (%)
120 110 100 90 80 70 60 50 40 30 20 10 0


Fig 6.

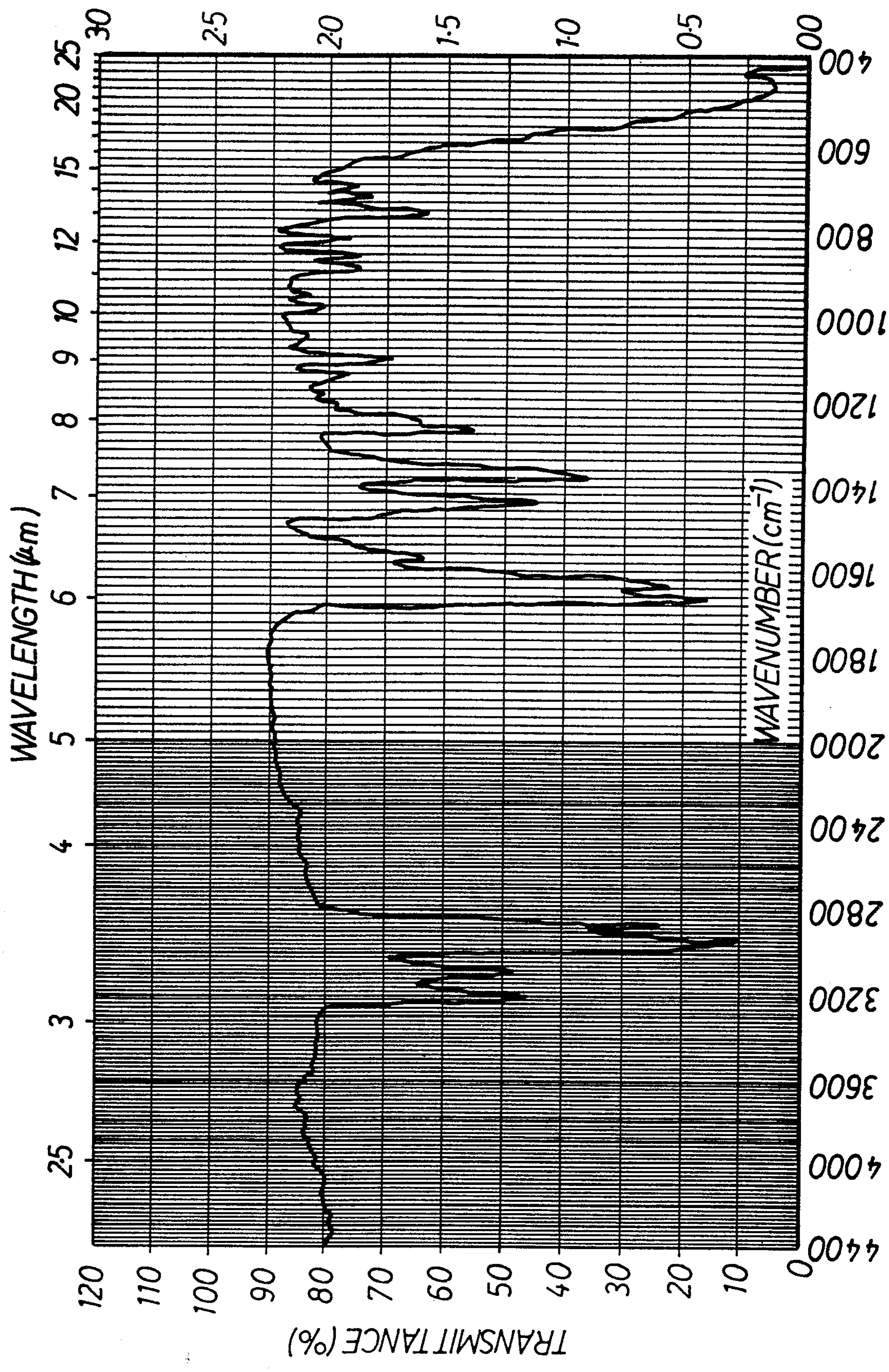
WAVELENGTH (μm)
2.5
3
4
5
6
7
8
9
10
12
15
20
25
WAVENUMBER (cm⁻¹)
4400
4000
3600
3200
2800
2400
2000
1800
1600
1400
1200
1000
800
600
400
TRANSMITTANCE (%)
120
110
100
90
80
70
60
50
40
30
20
10
0
3.0
2.5
2.0
1.5
1.0
0.5
0.0

Fig 8.

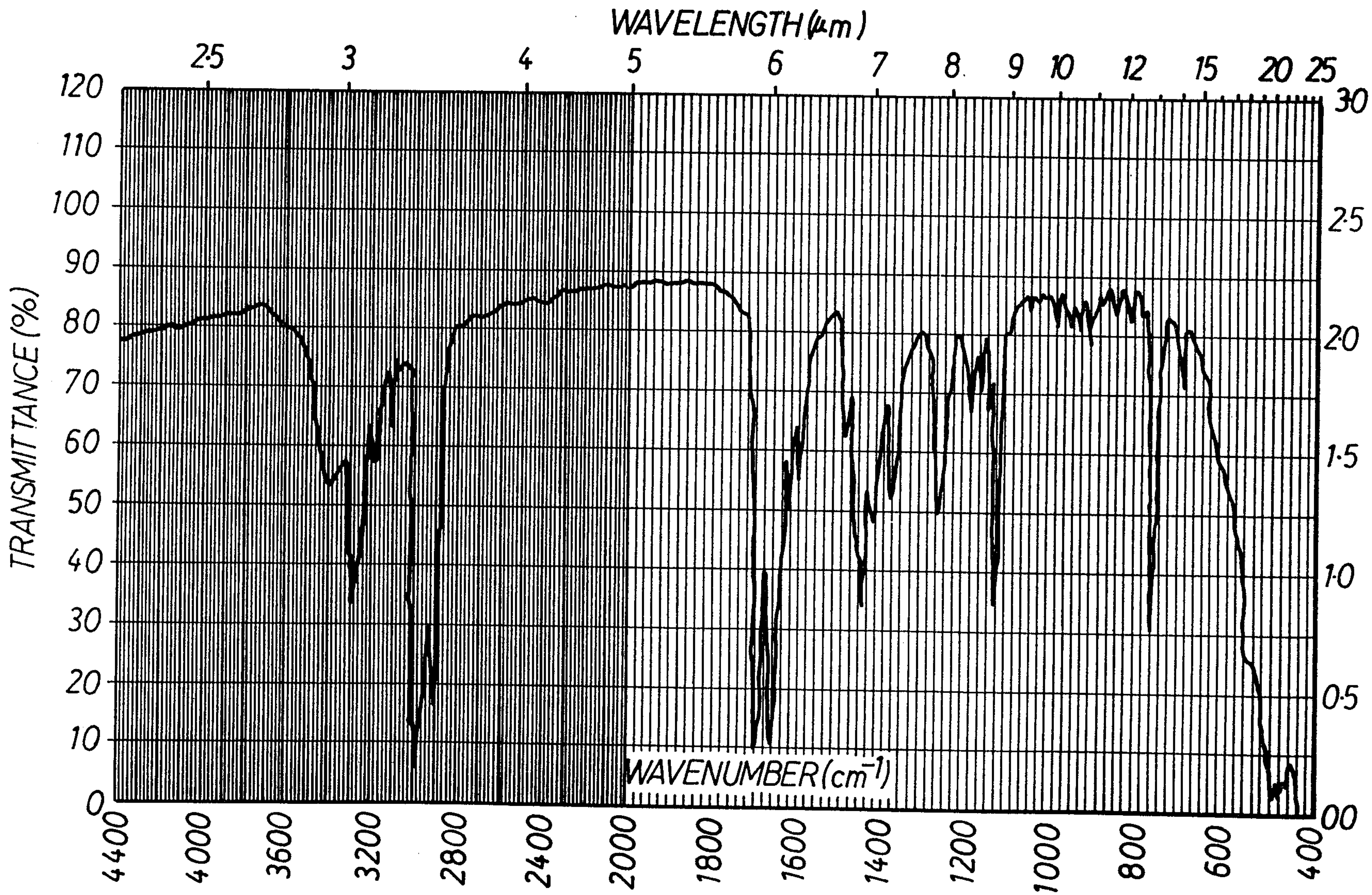
WAVELENGTH (µm)
2.5 3 4 5 6 7 8 9 10 12 15 20 25
TRANSMITTANCE (%)
120 110 100 90 80 70 60 50 40 30 20 10 0
3.0 2.5 2.0 1.5 1.0 0.5 0.0
WAVENUMBER (cm⁻¹)
4400 4000 3600 3200 2800 2400 2000 1800 1600 1400 1200 1000 800 600 400

Fig 9.

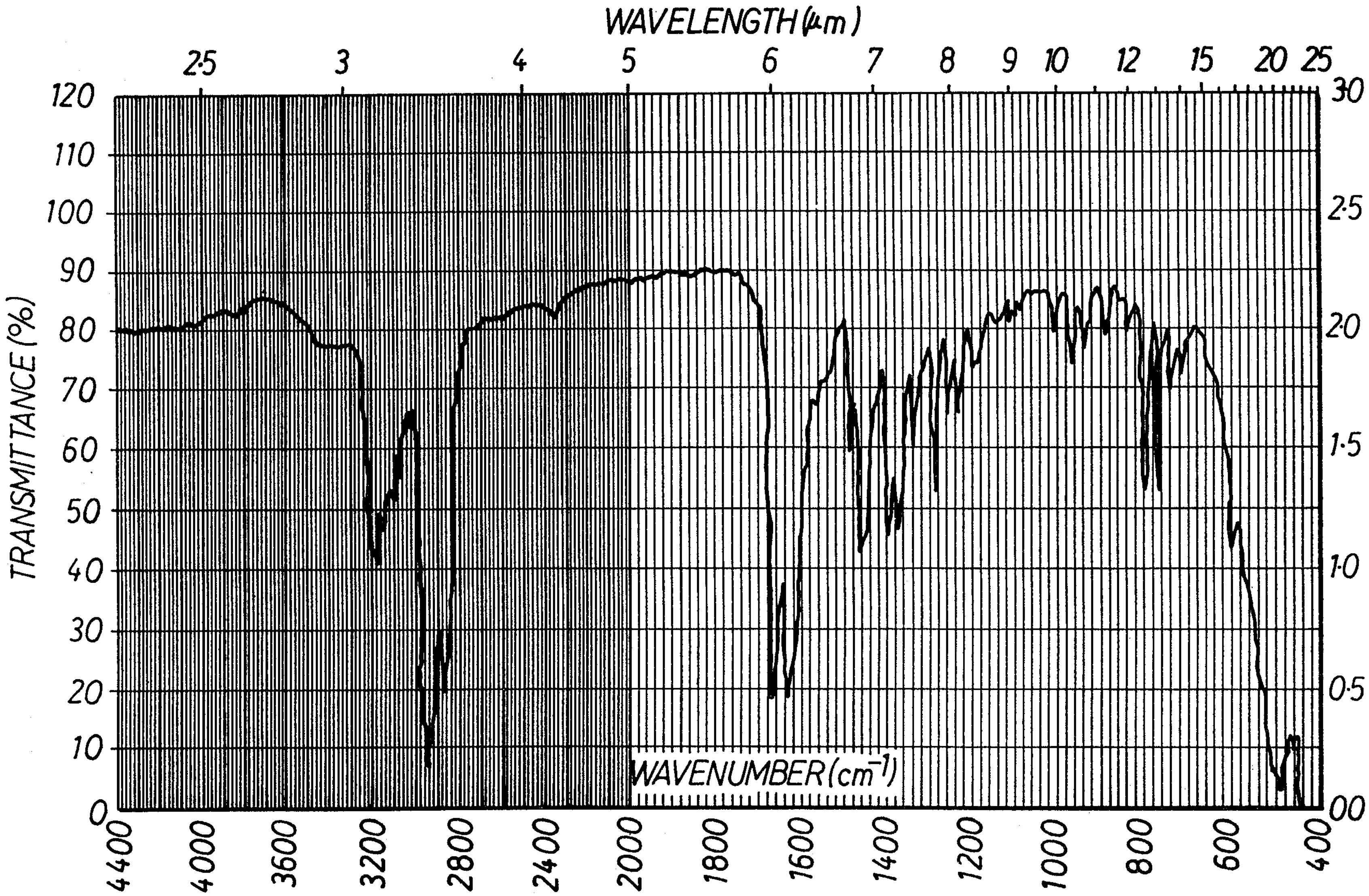
WAVELENGTH (μm)
2·5
3
4
5
6
7
8
9
10
12
15
20
25
120
110
100
90
80
70
60
50
40
30
20
10
0
TRANSMITTANCE (%)
3·0
2·5
2·0
1·5
1·0
0·5
0·0
WAVENUMBER (cm⁻¹)
4400
4000
3600
3200
2800
2400
2000
1800
1600
1400
1200
1000
800
600
400

Fig 10.

0115929

11/11

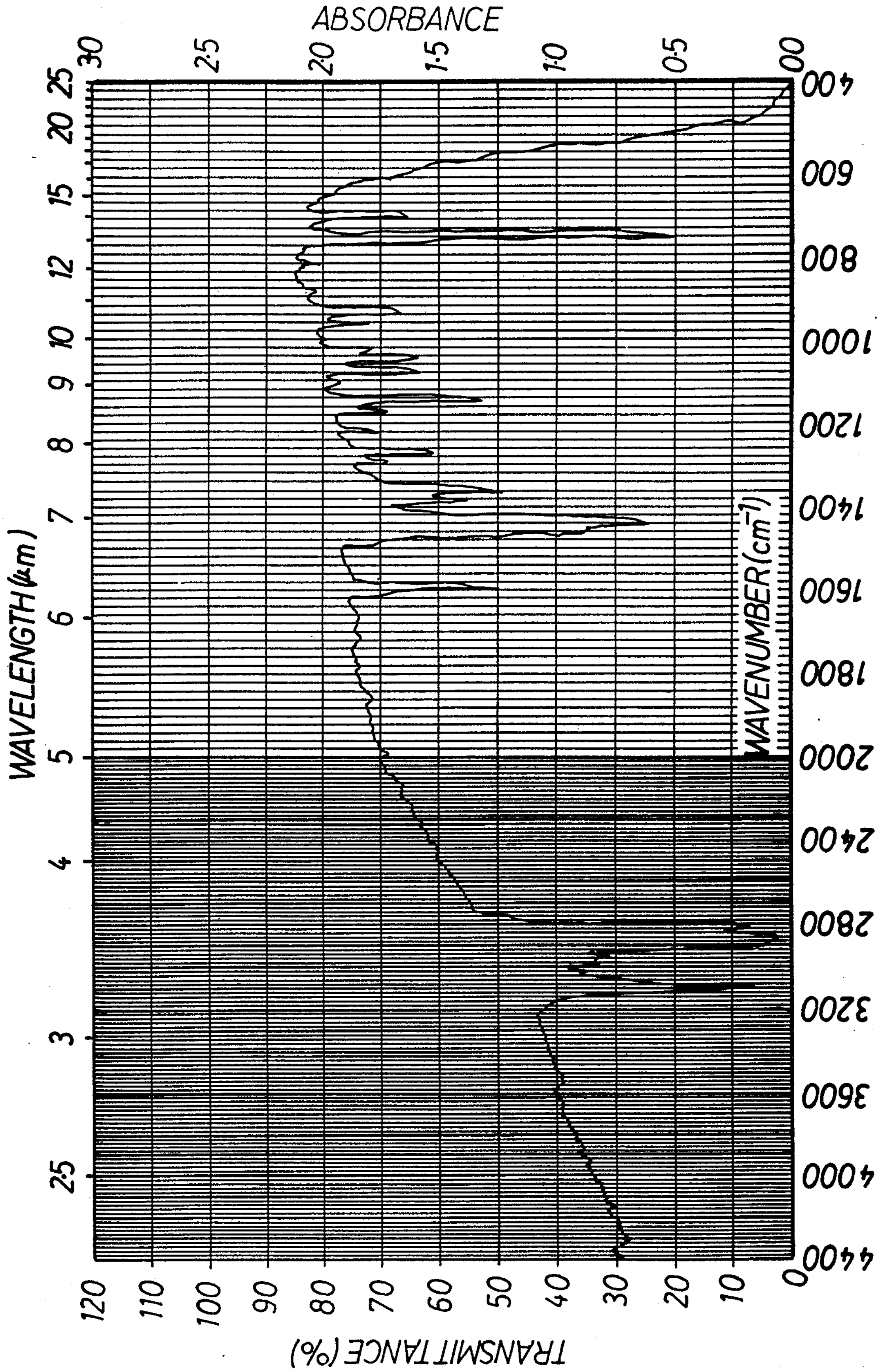


Fig 11.

0115929

European Patent Office

# EUROPEAN SEARCH REPORT

Application number
EP 84 30 0379

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | CHEMICAL ABSTRACTS, vol. 93, no. 5, 4th August 1980, page 32, no. 36830e, Columbus Ohio (USA); K.INAGAKI et al.: "Synthesis and antitumor activity of aminomethylpiperidine platinum (II) complexes". & INORG. CHIM. ACTA 1979, 37(2), L547-L548. *Abstract* --- | 1-4,10-12 | C 07 F 15/00<br>A 61 K 31/44 |
| X | CHEMICAL ABSTRACTS, vol. 91, no. 24, 10th December 1979, page 645, no. 202573d, Columbus Ohio (USA); F.D.ROCHON et al.: "The molecular and crystal structure of bis[2-(aminomethyl)pyridine]platinum(II) dichloride monohydrate". & ACTA CRYSTALLOGR., SECT. B 1979, B35(10), 2313-16. *Abstract* ----- | 1-4 | TECHNICAL FIELDS SEARCHED (Int. Cl. 3)<br>C 07 F 15/00 |

The present search report has been drawn up for all claims

| Place of search | Date of completion of the search | Examiner |
|---|---|---|
| THE HAGUE | 06-04-1984 | SUTER M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document